# EUROPÄISCHE PATENTSCHRIFT

(11) **EP 2 478 196 B1**
(45) Veröffentlichungstag und Bekanntmachung des Hinweises auf die Patenterteilung: **14.11.2018**
(21) Anmeldenummer: 10752571.9
(22) Anmeldetag: 08.09.2010
(51) Int. Cl.: F02D 41/02, F01N 9/00, F01N 11/00, F02D 41/22, F02D 41/24

(54) **ANORDNUNG UND VERFAHREN ZUM BETREIBEN EINER ABGASNACHBEHANDLUNGSVORRICHTUNG**
ARRANGEMENT AND METHOD FOR OPERATING AN EXHAUST GAS POST-TREATMENT DEVICE
SYSTÈME ET PROCÉDÉ POUR FAIRE FONCTIONNER UN DISPOSITIF DE POST-TRAITEMENT DE GAZ D'ÉCHAPPEMENT

(30) Priorität: 16.09.2009 DE 102009029517
(43) Veröffentlichungstag der Anmeldung: 25.07.2012
(73) Patentinhaber: Robert Bosch GmbH, 70442 Stuttgart (DE)
(72) Erfinder: BAUER, Patrick, 70619 Stuttgart (DE); OENCEL, Mehmet, 74357 Boennigheim (DE); BAUER, Ralph, 73730 Esslingen (DE); SCHELLING, Bernd, 70469 Stuttgart (DE); HOLST, Thomas, 70499 Stuttgart (DE); HOEGELE, Georg, 70825 Muenchingen (DE)
(86) Internationale Anmeldenummer: PCT/EP2010/063180
(87) Internationale Veröffentlichungsnummer: WO 2011/032871

(56) Entgegenhaltungen:
- EP-A1- 0 984 142
- EP-A1- 1 741 887
- DE-A1- 19 634 342
- DE-A1-102005 001 119
- US-A- 5 469 825
- US-A1- 2005 207 936
- US-A1- 2008 282 677

## Beschreibung

Die Erfindung betrifft eine Anordnung zum Betreiben einer Abgasnachbehandlungsvorrichtung, insbesondere eines Kraftfahrzeugs, wobei die Vorrichtung mehrere Verbraucher und ein Steuergerät umfasst, wobei das Steuergerät mindestens eine Schalteinrichtung zum Ein- und Ausschalten der Verbraucher aufweist.

### Stand der Technik

Anordnungen und Verfahren der eingangs genannten Art sind aus dem Stand der Technik bekannt. Moderne Abgasnachbehandlungsvorrichtungen zur Nachbehandlung des Abgases von Brennkraftmaschinen umfassen in der Regel mehrere Verbraucher, die mit elektrischer Energie versorgt werden müssen. Bei derartigen Verbrauchern handelt es sich beispielsweise um schaltbare Ventile oder auch Förderaggregate zum Fördern von Abgasnachbehandlungsmittel, das dem Abgas beigemischt werden soll. Üblicherweise werden dabei mehrere Verbraucher zusammen an einen Schalter der Schalteinrichtung angeschlossen, sodass durch Betätigen eines Schalters mehrere Verbraucher gleichzeitig ein- und/oder ausgeschaltet werden können. Werden jedoch durch Betätigen des Schalters die Verbraucher abgeschaltet, weil beispielsweise einer der Verbraucher eine Fehlfunktion zeigt, werden auch die anderen, noch funktionsfähigen beziehungsweise fehlerfrei funktionierenden Verbraucher abgeschaltet. Hierdurch wird der Betrieb der Abgasnachbehandlungsvorrichtung ungünstig und unnötig eingeschränkt.

Aus der Offenlegungsschrift EP 1 741 887 A1 ist außerdem bereits eine Abgasnachbehandlungsvorrichtung bekannt, die zwei Heizungen umfasst, welche durch eine Steuereinrichtung bestromt werden. Der Steuereinrichtung ist ein Schalterteil vorgeschaltet, dem indirekt ein weiterer Schalterteil zugeschaltet ist. Die Schalterteile sind nicht unabhängig voneinander in Verbindung mit Verbrauchern zu bringen, da sie hintereinander geschaltet sind.

### Offenbarung der Erfindung

Die erfindungsgemäße Anordnung mit den Merkmalen des Anspruchs 1 sieht vor, dass die Verbraucher ihrer Funktion nach gruppiert mit jeweils einem Schalter der Schalteinrichtung verbunden sind. Es ist also vorgesehen, dass die Verbraucher auf eine bestimmte Art und Weise gruppiert mit jeweils einem Schalter verbunden sind, wobei diese Gruppierung die Funktion der Verbraucher berücksichtigt. Dadurch sind beispielsweise die Verbraucher, die zur Erfüllung einer bestimmten Funktion der Abgasnachbehandlungsvorrichtung zusammen arbeiten, in einer Gruppe zusammengefasst beziehungsweise gruppiert, wobei die jeweilige Gruppe mit jeweils einem Schalter der Schalteinrichtung verbunden ist. Unter der funktionellen Gruppierung ist hierbei somit nicht zu verstehen, dass nicht ausschließlich gleich ausgebildete Verbraucher gruppiert sind, sondern insbesondere auch Verbraucher die unterschiedlich ausgebildet sind und/oder unterschiedliche Teilaufgaben erledigen, die jedoch zusammen eine bestimmte Funktion erfüllen. So können Verbraucher an unterschiedlichen Punkten der Abgasnachbehandlungsvorrichtung vorgesehen sein und unterschiedliche Aufgaben erledigen, die bevorzugt dem gleichen Zweck dienen und somit zusammen eine Funktion erfüllen.

Erfindungsgemäß sind die Schalter als Highside-Schalter ausgebildet. Das bedeutet, dass die Schalter die positive Betriebspannung der Verbraucher schalten. Das eigentliche Schalten der Verbraucher erfolgt im Betrieb bevorzugt über Lowside-Schalter. Über die Lowside-Schalter werden somit die Verbraucher im Betrieb zur Erfüllung ihrer Aufgabe geschaltet, während die Highside-Schalter bevorzugt als Sicherungsschalter dienen. Durch das Verbin
den mehrerer nach Funktion gruppierter Verbraucher an jeweils einem Schalter wird ein sogenanntes Bankkonzept realisiert. Vorteilhafterweise ist die Schalteinrichtung derart ausgebildet, dass die Verlustleistung auf allen Highside-Schaltern beziehungsweise Bänken gleichmäßig aufgeteilt ist.

Zweckmäßigerweise weist die Anordnung eine Diagnoseschaltung zum Erfassen einer Fehlfunktion in der Abgasnachbehandlungsvorrichtung, insbesondere zur Erfassung einer Fehlfunktion bei den Verbrauchern auf. Die Diagnoseschaltung ist besonders bevorzugt mit entsprechenden, den Verbrauchern zugeordneten Sensoren verbunden, die zur Funktionsprüfung dienen.

Weiterhin ist vorgesehen, dass die Diagnoseschaltung mit der Schalteinrichtung derart wirkverbunden ist, dass sie die Gruppe mit dem Verbraucher, dem eine erfasste Fehlfunktion zuzuordnen ist, durch Betätigen des entsprechenden Schalters deaktiviert. Hierdurch wird die entsprechende Gruppe beziehungsweise der entsprechende Verbraucher vor Zerstörung geschützt.

Erfindungsgemäß ist vorgesehen, dass eine Gruppe zumindest einen Verbraucher zum Druckaufbau für ein Abgasnachbehandlungsmittel umfasst. Bei einem derartigen Verbraucher handelt es sich zweckmäßigerweise um ein Förder- beziehungsweise Pumpenaggregat, weiches flüssiges Abgasnachbehandlungsmittel von einem Abgasnachbehandlungsmittel-Tank zu einem an einem Abgasrohr angeordneten Einspritzventil fördert. Dabei sorgt das Förderaggregat für einen Druckaufbau, der ein Einspritzen des Abgasnachbehandlungsmittels unter hohem Druck und damit ein effizientes Vermischen des Abgasnachbehandlungsmittels mit dem Abgas ermöglicht.

Erfindungsgemäß weist eine andere Gruppe zumindest einen Aktuator zum Betätigen des Einspritzventils für das Abgasnachbehandlungsmittel als Verbraucher auf. Bei diesem Aktuator handelt es sich beispielsweise um einen Magnetaktuator zum Verlagern einer Ventilnadel des Einspritzventils. Durch die Aufteilung des Aktuators zum Betätigen des Einspritzventils und des Verbrauchers zum Druckaufbau für das Abgasnachbehandlungsmittel in unterschiedliche Gruppen ist es beispielsweise möglich, bei einem Ausfall der ersten Gruppe mittels des Aktuators der zweiten Gruppe durch Betätigen des Einspritzventils den noch vorhandenen Restdruck in dem Abgasnachbehandlungsmittel-Fördersystem zu nutzen und so lange Abgasnachbehandlungsmittel-Einspritzvorgänge durchzuführen, bis der Druck beispielsweise vollständig abgebaut ist.

Erfindungsgemäß ist vorgesehen, dass eine weitere Gruppe zumindest einen Aktuator für ein Ventil zum Steuern einer Partikelfilterregeneration als Verbraucher umfasst. Bevorzugt handelt es sich bei diesem Ventil um ein sogenanntes HCl-Ventil. Ebenso ist es denkbar, dass es sich bei dem Ventil um ein Bypass-Ventil handelt, welches beispielsweise heißes, für die Partikelfilterregeneration notwendiges Abgas an einem in dem Abgasstrang befindlichen, dem Abgas Wärme entziehenden Element vorbei leitet, sodass das hochtemperierte Abgas zu Regeneration des der Partikelfilter genutzt wird. Bei dem genannten Element kann es sich beispielsweise um die Turbine eines Abgasturboladers oder auch um einen dem Partikelfilter vorgeschalteten Katalysator handeln.

Weiterhin ist vorgesehen, dass eine vierte Gruppe von Verbrauchern zumindest eine Heizeinrichtung erster Ordnung als Verbraucher umfasst. Bei der Heizeinrichtung erster Ordnung handelt es sich vorzugsweise um eine einem Katalysator und/oder einem Partikelfilter der Abgasnachbehandlungsvorrichtung zugeordnete Heizeinrichtung, die direkt den Katalysator oder den Partikelfilter erwärmt, um diese auf ihre jeweilige Aktivierungstemperatur zu bringen.

Schließlich ist vorgesehen, dass eine fünfte Gruppe zumindest einer Heizeinrichtung zweiter Ordnung als Verbraucher umfasst. Bei der Heizeinrichtung zweiter Ordnung handelt es sich zweckmäßigerweise um eine dem Abgasnachbehandlungsmittel-Fördersystem zugeordnete Heizeinrichtung, die insbesondere dazu dient, die Temperatur des Abgasnachbehandlungsmittels über dessen Gefrierpunkt zu halten, sodass auch bei niedrigen Umgebungstemperaturen die Förderung von Abgasnachbehandlungsmitteln sicher gewährleistet ist. Wie auch die Heizeinrichtung erster Ordnung kann auch die Heizeinrichtung zweiter Ordnung mehrere Heizelemente umfassen, die unterschiedlichen Stellen der Abgasnachbehandlungsvorrichtung zugeordnet sind. Aufgrund der vorteilhaften Gruppierung können somit die Heizelemte der zweiten Ordnung unabhängig von den Heizelementen der ersten Ordnung bei Vorliegen einer Fehlfunktion abgeschaltet werden.

Die beschrieben Gruppierung der Verbraucher erlaubt, dass die Abgasnachbehandlungsvorrichtung trotz Fehlfunktion eines Verbrauchers zumindest noch teilweise genutzt werden kann. Dies führt dazu, dass beispielsweise das Kraftfahrzeug nicht umgehend nach Auftreten einer Fehlfunktion in die Werkstatt gebracht werden muss. Vielmehr kann durch das zumindest teilweise Aufrechterhalten der Funktion der Abgasnachbehandlungsvorrichtung das Kraftfahrzeug zumindest bis zu einem gewissen Grad weiter betrieben werden. So kann beispielsweise eine Partikelfilterregeneration durchgeführt werden, auch wenn der oder die Verbraucher zum Druckaufbau für das Abgasnachbehandlungsmittel, also die erste Gruppe von Verbrauchern abgeschaltet ist. Natürlich sind auch andere funktionsbedingte Gruppierungen der Verbraucher denkbar. So bilden vorteilhafterweise in einer weiteren Ausführungsform die erste und die zweite Gruppe von Verbrauchern zusammen eine Gruppe von Verbrauchern, die allgemein das Abgasnachbehandlungsmittel-Fördersystem betreffen.

Im Folgenden soll die Erfindung anhand eines Ausführungsbeispiels näher erläutert werden. Dazu zeigen die
- Figur 1: eine schematische Darstellung einer vorteilhaften Anordnung zum Betreiben einer Abgasnachbehandlungsvorrichtung und
- Figur 2: eine Verfügbarkeitsmatrix zur Erläuterung der vorteilhaften Anordnung.

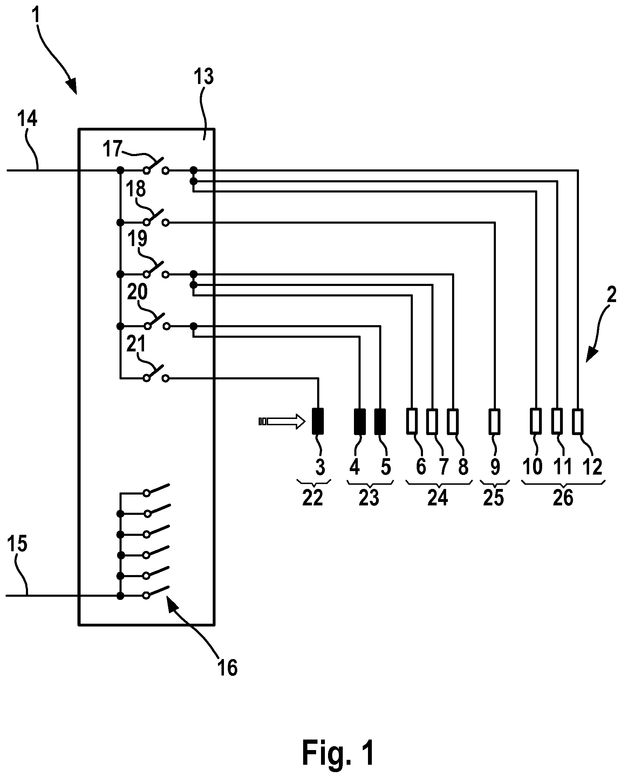

Die Figur 1 zeigt in einer stark schematisierten Darstellung eine vorteilhafte Anordnung 1 zum Betreiben einer nicht näher dargestellten Abgasnachbehandlungsvorrichtung einer Brennkraftmaschine. Die Abgasnachbehandlungsvorrichtung 2 umfasst mehrere Verbraucher 3 bis 12, die mit einer Schalteinrichtung 13 eines Steuergeräts 2 der Anordnung 1 zum Ein- und Ausschalten der Verbraucher 3 bis 12 verbunden sind. Die Schalteinrichtung 13 weist einen ersten Anschluss für eine positive Versorgungspannung 14 und einen zweiten Anschluss für eine negative Versorgungsspannung 15 einer hier nicht näher dargestellten Versorgungsspannungsquelle auf. Die Schalteinrichtung 13 weist mehrere der negativen Versorgungspannung 15 zugeordnete Schalter 16 auf, die Lowside-Schalter bilden, sowie mehrere der positiven Versorgungspannung 14 zugeordnete Schalter 17 bis 21, die Highside-Schalter der Schalteinrichtung 13 bilden.

Die Verbraucher 3 bis 12 sind vorteilhafterweise ihrer Funktion nach gruppiert an jeweils einen der Schalter 17 bis 21 angeschlossen. Eine erste Gruppe 22 bildet der Verbraucher 3, der bevorzugt ein Aktuator eines Einspritzventils für Abgasnachbehandlungsmittel ist. Eine zweite Gruppe 23 wird von den Verbrauchern 4 und 5 gebildet, bei denen es sich vorteilhafterweise um Aktuatoren zur Betätigung von Ventilen zur Durchführung einer Partikelfilterregeneration handelt. So kann es sich bei einem der Ventile beispielsweise um ein sogenanntes HCl-Ventil und bei dem anderen Ventil um ein Bypass-Ventil handeln, die durch entsprechendes Schalten eine Regeneration eines Partikelfilters der Abgasnachbehandlungsvorrichtung 2 ermöglichen.

Eine weitere Gruppe 24 umfasst die Verbraucher 6, 7 und 8, die zum Druckaufbau für das Abgasnachbehandlungsmittel vorgesehen sind. So handelt es sich bei zumindest einem der Verbraucher 6 bis 8 um einen Pumpen- beziehungsweise Förderaggregat für das Abgasnachbehandlungsmittel. Bei den anderen verbleibenden Verbrauchern dieser Gruppe 24 kann es sich um schaltbare Ventile, die zum Druckaufbau benötigt werden, handeln.

Eine weitere Gruppe 25 umfasst den Verbraucher 9, bei dem es sich um eine Heizeinrichtung erster Ordnung handelt. Diese ist direkt einer Abgasnachbehandlungseinrichtung, wie beispielsweise einem Katalysator order Partikelfilter, zugeordnet, um deren Temperatur derart zu erhöhen, dass die Abgasnachbehandlungseinrichtung ihre Aktivierungstemperatur erreicht.

Die verbleibenden Verbraucher 10 bis 12 sind in einer Gruppe 26 zusammengefasst. Bei diesen Verbrauchern handelt es sich um Heizeinrichtungen zweiter Ordnung, die beispielsweise dem Abgasnachbehandlungsmittel-Fördersystem oder auch dem Abgasrohr zugeordnet sind, um ein Gefrieren des Abgasnachbehandlungsmittels zu verhindern, beziehungsweise um das durch das Abgasrohr strömende Abgas aufzuheizen, bevor es durch eine der Abgasnachbehandlungseinrichtungen strömt, so dass das Abgas bereits vor dem Einströmen in die entsprechende Abgasnachbehandlungsmitteleinrichtung die benötigte Aktivierungstemperatur für die Abgasnachbehandlungseinrichtung erreicht.

Die Gruppe 26 ist dabei an den Schalter 17, die Gruppe 25 an den Schalter 18, die Gruppe 24 an den Schalter 19, die Gruppe 23 an den Schalter 20 und die Gruppe 22 an den Schalter 21 angeschlossen. Die unterschiedlichen Gruppen 22 bis 26 sind also unterschiedlichen Versorgungsbänken zugeordnet.

Durch diese vorteilhafte Gruppierung der Verbraucher 3 bis 12 in dem Steuergerät 2 sind nach Abschalten einer der Gruppen 22 bis 26 in Folge einer Fehlfunktion eines Verbrauchers in der abgeschalteten Gruppe die Hauptfunktionalitäten der anderen Gruppen nicht betroffen, wodurch eine weitere Verfügbarkeit der Teilfunktionen gewährleistet wird. Durch das Gruppieren der Verbraucher 3 bis 12 ihrer Funktion nach, wird somit ein Weiterbetrieb der Abgasnachbehandlungsvorrichtung bei Ausfall einer der Gruppen weiterhin ermöglicht. So ergibt sich hierdurch beispielsweise, dass bei Umgebungstemperaturen oberhalb des Gefrierpunktes des Abgasnachbehandlungsmittels die Partikelfilterregeneration und die Abgasnachbehandlungsmittel-Einspritzung stattfinden kann, obwohl beispielsweise Heizeinrichtungen zweiter Ordnung aufgrund einer Fehlfunktion abgeschaltet sind. Die Einhaltung der Gesetzgebung kann in diesem Fall weiterhin in vollem Umfang erfüllt werden.

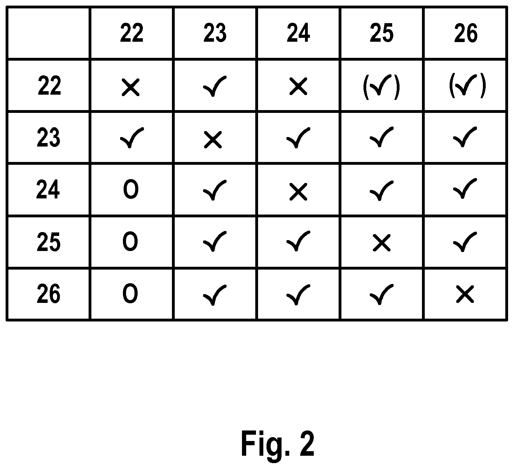

Die Figur 2 zeigt in einer so genannten Verfügbarkeitsmatrix den Zusammenhang zwischen Fehlfunktionen von Verbrauchern und den Auswirkungen der jeweiligen Fehlfunktion auf die übrigen Gruppen 22 bis 26. Die Spalten der Matrix betreffen die Fehlfunktion in den unterschiedlichen Gruppen 22 bis 26, während in den Zeilen die daraus folgenden Auswirkungen auf die anderen Gruppen 22 bis 26 beziehungsweise auf das Gesamtsystem der Abgasnachbehandlungsvorrichtung dargestellt sind. Ein "X" steht hierbei für "nicht möglich", ein Häkchen für "möglich", ein Kreis beziehungsweise "O" für "nicht relevant" und ein Häkchen in Klammern gesetzt für "betriebsbedingt".

Wird beispielsweise die Gruppe 22 abgeschaltet, weil der Verbraucher 3 eine Fehlfunktion zeigt, so ist eine Dosierung von Abgasnachbehandlungsmittel mittels des Einspritzventils nicht möglich, während eine einfache Partikelfilterregeneration weiterhin durchgeführt werden kann. Der Ausfall des Verbrauchers 3 beziehungsweise des Einspritzventils hat dabei keinen Einfluss auf die Gruppen bezüglich des Druckaufbaus (Gruppe 24) oder der Heizeinrichtungen erster und zweiter Ordnung (Gruppen 25 und 26).

Wird hingegen die Gruppe 26 mittels des Schalters 17 aufgrund einer Fehlfunktion eines der Verbraucher 10 bis 12 abgeschaltet, so ist eine Dosierung beziehungsweise Ansteuerung des Einspritzventils für das Abgasnachbehandlungsmittel betriebsbedingt weiterhin möglich, wenn die Umgebungstemperaturen oberhalb des Gefrierpunkts des Abgasnachbehandlungsmittels liegen. Die Gruppen 23, 24 und 25 können dabei weiter betrieben werden. Andere Zusammenhänge sollen an dieser Stelle nicht weiter erläutert werden, da sie sich eindeutig aus der Figur 2 ergeben.

## Patentansprüche

1. Anordnung (1) zum Betreiben einer Abgasnachbehandlungsvorrichtung, insbesondere eines Kraftfahrzeugs, wobei die Anordnung (1) mehrere Verbraucher (3-12) und ein Steuergerät (2) umfasst, wobei das Steuergerät (2) mindestens eine Schalteinrichtung (13) zum Ein- und Ausschalten der Verbraucher (3-12) aufweist, **dadurch gekennzeichnet, dass** die Verbraucher (3-12) über Lowside-Schalter (16) zur Erfüllung ihrer Aufgabe geschaltet werden und ihrer Funktion nach gruppiert mit jeweils einem als Highside-Schalter ausgebildeten Sicherheitsschalter (17-21) der Schalteinrichtung (13) verbunden sind, dass eine erste Gruppe (22) von Verbrauchern (3) zumindest einen Aktuator eines Einspritzventils für das Abgasnachbehandlungsmittel umfasst, dass eine zweite Gruppe (23) als Verbraucher (4,5) Aktuatoren zum Betätigen von Ventilen zur Durchführung einer Partikelfilterregeneration aufweist, und dass eine dritte Gruppe (24) Verbraucher (6-8), die zum Druckaufbau für das Abgasnachbehandlungsmittel vorgesehen sind, aufweist.

2. Anordnung nach Anspruch 1, **gekennzeichnet durch** eine Diagnoseschaltung zum Erfassen einer Fehlfunktion in der Abgasnachbehandlungsvorrichtung.

3. Anordnung nach einem der vorhergehenden Ansprüche, **dadurch gekennzeichnet, dass** die Diagnoseschaltung mit der Schalteinrichtung (13) derart wirkverbunden ist, dass sie die Gruppe (22-26) mit dem Verbraucher (3-12), dem eine erfasste Fehlfunktion zuzuordnen ist, durch Betätigen des entsprechenden Schalter (17-21) deaktiviert.

4. Anordnung nach Anspruch 1, **dadurch gekennzeichnet, dass** die dritte Gruppe (24) als Verbraucher zumindest ein Förderaggregat für das Abgasnachbehandlungsmittel und schaltbare Ventile für den Druckaufbau aufweist.

5. Anordnung nach einem der vorhergehenden Ansprüche, **dadurch gekennzeichnet, dass** eine vierte Gruppe (25) zumindest eine Heizeinrichtung erster Ordnung als Verbraucher (9) umfasst.

6. Anordnung nach einem der vorhergehenden Ansprüche, **dadurch gekennzeichnet, dass** eine fünfte Gruppe (26) zumindest eine Heizeinrichtung zweiter Ordnung als Verbraucher (10-12) umfasst.

## Claims

1. Arrangement (1) for operating an exhaust gas aftertreatment device, in particular of a motor vehicle, wherein the arrangement (1) comprises a plurality of consumers (3-12) and a control module (2), wherein the control module (2) comprises at least one switching unit (13) for switching the consumers (3-12) on and off, **characterized in that** the consumers (3-12) are switched by low-side switches (16) in order to fulfil their function and, grouped according to their function, are in each case connected to one safety switch (17-21), embodied as a high-side switch, of the switching unit (13), **in that** a first group (22) of consumers (3) comprises at least one actuator of an injection valve for the exhaust gas aftertreatment agent, **in that** as consumers (4, 5), a second group (23) comprises actuators for operating valves for performing particle filter regeneration, and **in that** a third group (24) comprises consumers (6-8) which are provided for building up pressure for the exhaust gas aftertreatment agent.

2. Arrangement according to Claim 1, **characterized by** a diagnostic circuit for detecting a malfunction in the exhaust gas aftertreatment device.

3. Arrangement according to one of the preceding claims, **characterized in that** the diagnostic circuit is operatively connected to the switching unit (13), in such a way that by operating the corresponding switch (17-21) it deactivates the group (22-26) comprising the consumer (3-12), to which a detected malfunction is attributable.

4. Arrangement according to Claim 1, **characterized in that**, as consumers, the third group (24) comprises at least one feed unit for the exhaust gas aftertreatment agent and switchable valves for building up pressure.

5. Arrangement according to one of the preceding claims, **characterized in that** as consumer (9) a fourth group (25) comprises at least one primary heating unit.

6. Arrangement according to one of the preceding claims, **characterized in that** as consumer (10-12) a fifth group (26) comprises at least one secondary heating unit.

## Revendications

1. Arrangement (1) pour faire fonctionner un dispositif de post-traitement des gaz d'échappement, notamment d'un véhicule automobile, l'arrangement (1) comportant plusieurs récepteurs (3-12) et un contrôleur (2), le contrôleur (2) possédant au moins un dispositif de commutation (13) servant à la mise en circuit et hors circuit des récepteurs (3-12), **caractérisé en ce que** les récepteurs (3-12) sont commutés par des commutateurs au niveau bas (16) pour accomplir leur tâche et sont respectivement reliés à un commutateur de sécurité (17-21), réalisé sous la forme d'un commutateur au niveau haut, du dispositif de commutation (13) en étant groupés d'après leur fonction, **en ce qu'**un premier groupe (22) de récepteurs (3) comporte au moins un actionneur d'un injecteur pour l'agent de post-traitement des gaz d'échappement, **en ce qu'**un deuxième groupe (23) possède comme récepteurs (4, 5) des actionneurs destinés à actionner des vannes servant à effectuer une régénération de filtre à particules, et **en ce qu'**un troisième groupe (24) possède des récepteurs (6-8) qui sont conçus pour la mise en pression de l'agent de post-traitement des gaz d'échappement.

2. Arrangement selon la revendication 1, **caractérisé par** un circuit de diagnostic destiné à détecter un défaut de fonctionnement dans le dispositif de post-traitement des gaz d'échappement.

3. Arrangement selon l'une des revendications précédentes, **caractérisé en ce que** le circuit de diagnostic est en liaison active avec le dispositif de commutation (13) de telle sorte qu'en actionnant le commutateur (17-21) correspondant, il désactive le groupe (22-26) où se trouve le récepteur (3-12) auquel est à associer un défaut de fonctionnement.

4. Arrangement selon la revendication 1, **caractérisé en ce que** le troisième groupe (24) possède comme récepteurs au moins un groupe de transport pour l'agent de post-traitement des gaz d'échappement et des vannes commutables pour la mise en pression.

5. Arrangement selon l'une des revendications précédentes, **caractérisé en ce qu'**un quatrième groupe (25) comporte, en tant que récepteur (9), au moins un dispositif de chauffage de premier ordre.

6. Arrangement selon l'une des revendications précédentes, **caractérisé en ce qu'**un cinquième groupe (26) comporte, en tant que récepteur (10-12), au moins un dispositif de chauffage de deuxième ordre.
